# EUROPEAN PATENT APPLICATION

(11) **EP 3 892 402 A1**
(43) Date of publication of application: **13.10.2021**
(21) Application number: 20168214.3
(22) Date of filing: 06.04.2020
(51) Int. Cl.: B22F 3/105, B23K 15/00, B23K 26/342, B29C 64/153, B29C 64/393, B33Y 10/00, B33Y 40/10, B33Y 50/02, G01S 5/00

(54) **POSITIONING MEANS FOR ADDITIVE MANUFACTURING**

(71) Applicant: Siemens Aktiengesellschaft, 80333 München (DE)
(72) Inventor: Lebed, Yaroslav, 13629 Berlin (DE)

(57) **Abstract**

The present invention relates to a positioning method for an additive build-up (12) on a pre-existing component (10). The method comprises, a), providing the pre-existing component (10) as a substrate for the build-up (12), b), forming surface alignment features (13) of predefined dimensions and coordinates on a substrate surface of the component (10), c), recording an image of the substrate surface (10), wherein the image includes a contour (15) of the surface (11) as well as the alignment features (13), d), scaling the recorded image to real dimensions based on the predetermined dimensions of the alignment features (13), e) providing a geometry of the build-up (12), and, f), aligning the geometry of the build-up (12) and the scaled geometry of the substrate surface (11) based on the predefined coordinates. Moreover, an according computer program product, an apparatus and a method of additively manufacturing the build-up are provided.

## Description

The present invention relates to a positioning method for additive manufacturing, an according computer program product, as well as a method of additive manufacturing the build-up on a pre-existing component. Further, an according apparatus is presented.

The method of additive manufacturing may relate to a hybrid manufacturing method, such as for repair or refurbishment of spare and wear parts or components.

Preferably, the component denotes a high-performance component, such as a component applied in power generation, aerospace or automotive sector. The component may as well be a component of a turbo machine, e.g. in the flow path hardware of a gas turbine. The component is, thus, preferably made of a nickel- or cobalt-based superalloy, particularly a precipitation hardened alloy.

Additive manufacturing techniques comprise e.g. powder-bed-fusion (PBF) methods, such as selective laser melting (SLM), selective laser sintering (SLS) or electron beam melting (EBM).

Additive manufacturing, particularly powder-bed methods have proven to be useful and advantageous in the fabrication of prototypes or complex components, such as components with a mazelike or convoluted structure or functionally cooled components. Further, the additive manufacture stands out for its short chain of process steps which in turn enables material economization and a particularly low lead time.

Further additive manufacturing approaches relate to "Directed Energy Deposition (DED)", such as laser cladding, electron beam or plasma welding, metal inkjet molding (MIM), so-called sheet lamination methods, or thermal spraying (VPS, LPPS) methods, cold spraying (GDCS).

Apparatuses or setups for such methods usually comprise a manufacturing or build platform on which a structure for the component is built layer-by-layer after the feeding of a layer of base material which may then be melted, e.g. by an energy beam, such as a laser, and subsequently solidified.

The layer thickness is determined by a recoater that distributes powder, e.g. automatically, over the powder bed and removes excess material from a manufacturing plane or build space. Typical layer thicknesses amount to between 20 µm and 40 µm. During the manufacture, an energy beam, such as a laser, scans over the surface and melts the powder on selected areas which may be predetermined by a CAD-file (computer-aided-design) according to the geometry of the component or build-up to be manufactured.

Said scanning or irradiation is preferably carried out in a computer implemented way or via computer aided means, such as computer-aided-manufacturing (CAM) instructions, which may be present in the form of a dataset. Said dataset or CAM-instructions may be or refer to a computer program or computer program product.

In hybrid additive manufacturing or additive repair methods, there is a stringent demand to accurately align a structure to be build up, established or printed onto a pre-established a predefined substrate component and/or build plate. Therefore, the pre-manufactured part is expediently placed in an according manufacturing setup and fixed thereto before the manufacturing starts.

Some approaches for such alignment include that such pre-existing or pre-manufactured component is put manually into a build space and aligned to an according printer's coordinate system manually, mechanically or by laser engraving, or the like.

Further, there are semiautomated optical scanning approaches, wherein e.g. reference features are printed onto a clamping fixture in the printing device, wherein the fixture can be removed afterwards. Then, substrate parts are installed and fixed to the fixture or e.g. placed in a laser scanning device, where a scan of the reference parts and of the substrate is carried out. Such scanned model is then placed or imported and overlapped or brought in alignment with a scanned model, thereby positioning the build-up to be printed with regard to the physical substrate or part which is already placed in the given device.

Such a method of additively manufacturing a tip or build-up structure on a pre-existing part is e.g. presented in DE 10 2017 219 333 A1 and EP 3 450 055 A1, respectively.

Such approaches, however, lack of a satisfying accuracy for the alignment of the substrate with regard to the structure to be built on top of it. If the given alignment is, on the contrary, optimal, this allows to fully dispense with subsequent machining or post-processing efforts.

It is, thus, an object of the present invention to provide means with which the positioning of an additive build-up on a dedicated substrate can be improved. In turn, this approach leads to significant improvements in hybrid additive manufacturing and therewith for serialisation of additive manufacturing approaches as a whole.

The mentioned object is achieved by the subject-matters of the independent claims. Advantageous embodiments are subject-matters of the dependent claims.

An aspect of the present invention relates to a positioning method, such as a computer-implemented method, for establishing an additive build-up on a pre-manufactured a pre-existing (substrate) component. The method comprises providing said pre-existing component as a substrate for the build-up, i.e. comprising a substrate surface.

The method further comprises forming (characteristic) surface alignment features of predefined dimensions and predefined coordinates on the substrate surface of the component.

In an embodiment, said surface alignment features are formed by laser ablation or laser engraving in the substrate surface. To this effect, said alignment features may represent two-dimensional reference geometries. Further, a laser or energy beam may be used which is anyway implemented in an according additive manufacturing device or setup.

In an embodiment, the alignment features are formed such that they provide high-contrast outlines at a level of the substrate surface. This embodiment particularly improves accuracy in the recognition and/or alignment of the substrate component with regard to the geometry to be established on top. Said high-contrast outlines may e.g. be established by an engraving of a certain depth as compared to further features which remain (flush) at the level of the substrate surface.

The method further comprises recording an image, such as an optical photograph, of the substrate surface, wherein the image includes a contour of the surface as well as the alignment features. Said record or image may particularly be a high-resolution photograph taken by an equipment of a corresponding apparatus are 3D printing device.

The method further comprises scaling the recorded image, such as from magnified dimensions, to real dimensions based on the predetermined dimensions of the alignment features.

The method further comprises providing a geometry of the build-up, such as by way of a CAD-file. Said CAD file may be present in a so-called STL (stereolithography) format or a surrogate format, such as any processable format for a subsequent build job preparation or manufacturing method.

The method further comprises aligning or providing the geometry of the build-up and the scaled geometry of the substrate surface based on the predefined coordinates.

The presented method advantageously allows to achieve an unsurpassed alignment accuracy of the built-up structure to be established with regard to the substrate, as compared to existing methods known in the art. Further, as there are indications that future additive manufacturing technology will demand for a combination of conventional and disruptive, additive technologies, such alignment approaches seem to be key for industrialisation of additive manufacturing solutions as a whole, particularly when highly sophisticated component of high-performance materials, such as superalloys are concerned. These approaches only allow for the implementation of complex design and to award the components with mechanical properties which have not yet been achieved by conventional approaches.

In an embodiment the image is recorded with or via a high-resolution optical camera.

In an embodiment, the scaled image is converted into a design format, such as an STL format, a VRML (virtual reality modelling language) file, numerical code or machine control instructions, wherein said format is expediently processable in the digital chain of additive manufacturing and corresponding preparatory steps.

In an embodiment, manufacturing instructions, such as provided by way of CAM (computer-aided-manufacturing), are generated from the provided geometry of the build-up and the (scaled) geometry of the substrate surface. Such instructions may include the subdivision of the geometry in a plurality of single layers (slices) as well as the selection of according process or irradiation parameters.

In an embodiment, the geometry of the build-up and the (scaled) geometry of the substrate surface are aligned, exported or positioned in a single coordinate system, such as of an according manufacturing device, 3D-printer or build job preparation equipment.

A further aspect of the present invention relates to a computer program and/or computer program product comprising instructions which, when the program is executed by a computer or data processing device or processor, cause said device to carry out the steps of the scaling, the providing and the exporting as described above.

A computer program product as referred to herein may relate to a computer program or digital means constituting or comprising a storage medium like a memory card, a USB stick, a CD-ROM, a DVD or a file or an instruction downloaded or down-loadable from a server or network. Such product may as well be provided by a wireless communication network or via transfer of the corresponding information by the given computer program. A computer program product may include a non-transitory computer-readable storage medium or storing applications, programs, program modules, scripts, source code, program code, object code, byte code, compiled code, interpreted code, machine code, executable instructions, and/or the like.

A further aspect of the present invention relates to an apparatus comprising said data processing device and a recording equipment, such as an (ultra) high resolution camera which is coupled to said device, wherein the apparatus is further configured to carry out the method steps as described above. In conjunction with the computer or data processing device - and executing an according computer program - the apparatus is expediently set up to carry out the entirety of method steps of the positioning method as described above.

A further aspect of the present invention relates to a method of additive manufacturing a build-up on a pre-existing component, such as preferably layer-by-layer, comprising providing said pre-existing component as a substrate for the build-up and applying the positioning method as described in order to align the geometry of the build-up at high accuracy to a respective location of the substrate component. Said additive manufacturing method further comprises executing a build job or manufacturing process by way of manufacturing instructions generated from the provided geometry of the build-up and the (scaled) geometry of the substrate surface.

In an embodiment, the pre-existing component is machined in order to provide an even substrate surface.

In an embodiment, the build-up is manufactured by way of the powder bed fusion method, such as selective laser melting or electron beam melting.

In an embodiment, the build-up is manufactured out of a high-performance material such as a superalloy for turbine applications and the complex geometry, i.e. at least comprising a geometry with small feature size and/or a cavity like a cooling channel of the like.

Advantages and embodiments relating to the described positioning method and/or computer program (product) may as well pertain or be valid with regard to the apparatus and/or the manufacturing method as described.

Further features, expediencies and advantageous embodiments become apparent from the following description of the exemplary embodiment in connection with the Figures.
Figure 1 shows a simplified sketch of a hybrid additive manufacturing method.
Figure 2 indicates in a schematic flow chart method steps according to the present invention.
Figure 3 shows in a schematic top view, a substrate surface, to which an additive build-up is to be positioned and established.
Figure 4 shows, in a simplified perspective view, an alignment of the build-up with regard to an underlying substrate surface.

Like elements, elements of the same kind and identically acting elements may be provided with the same reference numerals in the Figures. The Figures are not necessarily depicted true to scale and may be scaled up or down to allow for a better understanding of the illustrated principles. Rather, the described Figures are to be construed in a broad sense and as a qualitative base which allows a person skilled in the art to apply the presented teaching in a versatile way.

The term "and/or" as used herein shall mean that each of the listed elements may be taken alone or in conjunction with two or more of further listed elements.

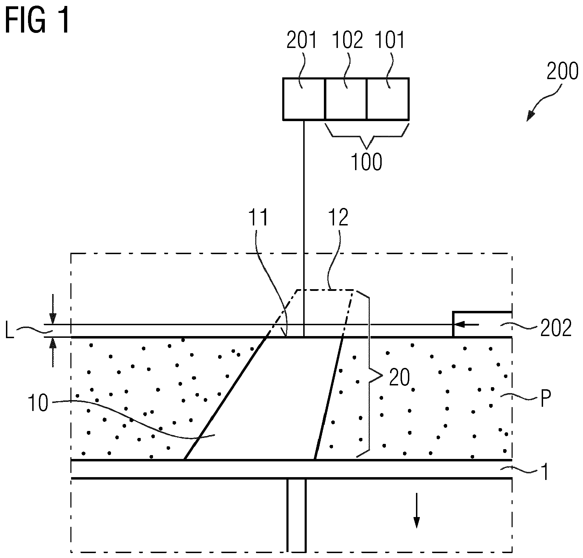

Figure 1 shows an additive manufacturing device 200. Said device 200 may be or be part of a "3D printer". Said device preferably denotes a powder-bed-fusion equipment, i.e. for selectively irradiating a powder bed, and therewith establishing a structure or build-up, by selective laser melting, selective laser sintering or electron beam melting.

The device 200 comprises a build platform 1. Onto the build platform 1, a predefined, pre-manufactured, or pre-existing component 10 is placed and fixed. Further, a powder bed out of the powdery base material P is arranged around said (substrate) component 10 in order to enable a so-called hybrid manufacturing process, wherein a further build-up structure 12 is to be established on top of said substrate structure 10.

To this effect, a preferably even substrate surface 11, is to be provided and prepared as a manufacturing surface (not explicitly indicated). Then, a recoater 202 usually distributes a (further) layer of powdery material P which is then selectively irradiated by an irradiation device 201, such as a laser or an electron beam unit. By these means, the built structure 12 is then established additively or layer-by-layer, until the predefined geometry of said build-up is completed. After any layerwise (cf. layer L) irradiation, the build platform 1 is usually lowered by a measure corresponding to the layer thickness (as indicated with reference numeral L) .

Said unit or irradiation device 201 is preferably coupled to or controlled by a control device, computer or processor 101.

Many manufacturing devices further comprise a recording equipment, such as an optical camera which is indicated by reference numeral 102. Preferably, said camera is a high-resolution, more preferably, an ultra-high resolution camera, with which images of a manufacturing surface and/or said substrate surface 11 may be recorded at high accuracy and in a layerwise manner (cf. method step c) further below).

Said computer and said recording equipment preferably form part of the apparatus 100.

The pre-existing component 10, said build-up 12 and/or composite 20, which is formed by said component and said build-up - as referred to herein - may particularly relate to a part or an article of complex shape, such as with filigree portions or complex structures. Preferably, said component is made of a high-performance material, such as a material of great strength and/or thermal resistivity.

Particularly, said part may constitute a part of a steam or gas turbine component, such as a blade, vane, shroud, shield, such as heat shield, tip, segment, insert, injector, seal, transition, burner, nozzle, strainer, orifice, liner, distributor, dome, boost, cone, lance, plate, resonator, piston or any corresponding retrofit (kit). Alternatively, said component may relate to another or similar component, such as a component applied in automotive or aeroflight applications.

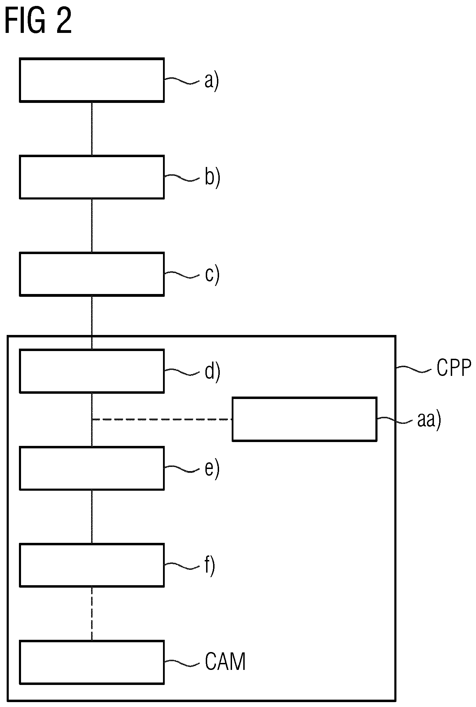

The flowchart of Figure 2 indicates method steps of the present invention.

Said method is a positioning method for an additive build-up 12 on a pre-existing component 10, comprising, a), providing the pre-existing component 10 as a substrate for the build-up 12.

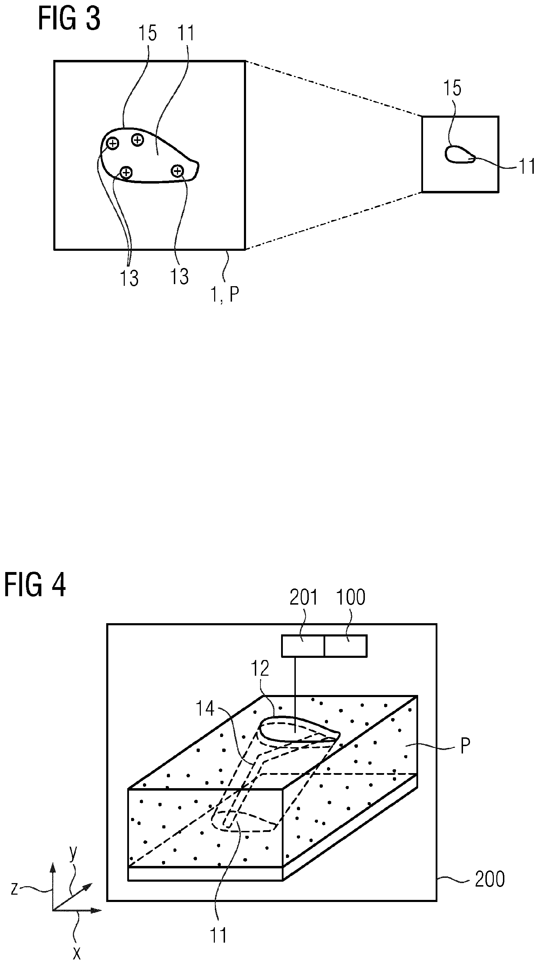

The method further comprises, b), forming surface alignment features 13 of predefined dimensions and coordinates on the substrate surface 11 of the component 10. The alignment features 13 (cf. Figure 3) are formed by laser ablation or engraving in the substrate surface 11 (see below).

The method further comprises, c), recording an image (not explicitly indicated) of the substrate surface 11, wherein the image includes a contour 15 of the surface 11 as well as the alignment features 13.

The method further comprises, d), scaling the recorded image from magnified and/or recorded dimensions to real dimensions based on the predetermined dimensions of the alignment features 13.

Optionally, the method further comprises, aa) - as indicated by the dashed line - converting the scaled image to a processable format, such as an STL (stereolithography) or VRML (virtual reality modelling language) file, numerical code or machine control instruction, such as G-code.

Method further comprises, e), providing a geometry of the build-up 12.

The method further comprises, f), aligning the geometry of the build-up 12 and the scaled /geometry of the substrate surface 11 based on the predefined coordinates.

As indicated by the rectangle CPP, the described steps d) to f), and optionally, a subsequent generation and/or execution of computer aided manufacturing instructions (cf. "CAM"), may be subject to a computer program and/or computer program product. All of these method steps may e.g. be fully implemented by generic data processing means.

Figure 3 indicates a top view image of the substrate surface 11. Particularly, a contour 15 of the substrate surface 11 is shown in a central region of the build platform 1 (not directly shown here). In corners of said surface 11, the surface alignment features 13 - in numbers 4 - are arranged as encircled crosses the dimensions as well as coordinates of which - are known from a previous engraving or ablating step and/or pre-defined.

Preferably, the alignment features 13 are formed such that they provide high-contrast outlines at a level of the substrate surface 11. Therefore, a structure of the crosses of the surface alignment features 13 are preferably fully flush with a level of the substrate surface 11 (cf. Figure 2 in conjunction with step b).

A scaling according to method step d) (cf. Figure 2 above) is shown on the right in Figure 3, where the recorded image is indicated in real dimensions while the record of said image (shown on the left in Figure 3) preferably exhibits a magnified, high-resolution image.

Figure 4 shows, as indicated above by way of step f), an alignment of the geometry of the build-up 12 and the scaled geometry of the substrate surface 11. Owing to the described method steps, said alignment may be carried out at an accuracy that cannot be reached by state-of-the-art approaches. Particularly, it is shown in Figure 4 that - by the given means - the build-up 12 can advantageously be aligned such to the substrate surface 11 as if the whole article (composite) to be achieved were to be manufactured fully additively. Preferably, thereby, manufacturing instructions CAM are generated from the provided geometry of the build-up 12 and the geometry of the substrate surface 11 and the described alignment.

Furthermore, the geometry of the build-up 12 and the geometry of the substrate surface 11 may be exported in a single coordinate system x,y,z of an according manufacturing device 200 or build job preparation means as shown on the right in Figure 4

Usually, during build job preparation, a CAD file is imported into a manufacturing device or build job preparation means, and then - via CAM - said geometry is sliced in an expedient number of single layers to be consecutively and selectively exposed by an according energy beam, such as a laser beam. As well, during CAM, according manufacturing parameters may already be defined. Also, data format conversion may need to be carried out. E.g., starting from an STL or VRML file, a "slicing" format like CLI ("common layer interface") or SLI, or 3MF format, such as from an STL format may be generated. The particulars of this conversion or data processing may depend on the specific machine or device architecture of additive manufacturing hardware (cf. reference numeral 200 above)."

Once the described providing step e) and the mentioned aligning step f) were applied, said computer aided manufacturing instructions only need to be executed in an according physical manufacturing process in a layerwise manner - as described by way of Figures 1 and 4 - in order to manufacture a component (or only parts of it) with significantly improved properties and - owed to the additive approach - with a preferably low lead time.

## Claims

1. Positioning method for an additive build-up (12) on a pre-existing component (10), comprising the following steps:
- a) providing the pre-existing component (10) as a substrate for the build-up (12),
- b) forming surface alignment features (13) of predefined dimensions and coordinates on a substrate surface of the component (10),
- c) recording an image of the substrate surface (10), wherein the image includes a contour (15) of the surface (11) as well as the alignment features (13),
- d) scaling the recorded image to real dimensions based on the predetermined dimensions of the alignment features (13),
- e) providing a geometry of the build-up (12), and
- f) aligning the geometry of the build-up (12) and the scaled geometry of the substrate surface (11) based on the predefined coordinates.

2. Method according to claim 1, wherein the alignment features (13) are formed by laser ablation or engraving in the substrate surface (11).

3. Method according to claim 1 or 2, wherein the alignment features (13) are formed such that they provide high-contrast outlines at a level of the substrate surface (11) .

4. Method according to one of the previous claims, wherein the image is recorded with a high-resolution optical camera (100).

5. Method according to one of the previous claims, wherein the scaled image is converted (aa) into a design format, such as STL, which is processable for an additive manufacturing process.

6. Method according to claim 5, wherein manufacturing instructions (CAM) are generated from the provided geometry of the build-up (12) and the geometry of the substrate surface (11).

7. Method according to one claim 5 or 6, wherein
the geometry of the build-up (12) and the geometry of the substrate surface (11) are exported in a single coordinate system (x,y,z), such as of an according manufacturing device (200) or build job preparation means.

8. Computer program product (CPP) comprising instructions which, when the program is executed by a data processing device (101), cause said device to carry out the steps of the method d) to f) according one of the previous claims.

9. Apparatus (100) comprising a data processing device (112) and a recording equipment (102), such as a high-resolution camera, coupled to said device (101), wherein the apparatus (100) is configured to carry out the method of one of claims 1 to 7.

10. Method of additive manufacturing a build-up (12) on a pre-existing component (10) comprising:
- providing said pre-existing component (10) as a substrate for the build-up (12),
- applying the positioning method as claimed in one of claims 1 to 7 in order to align the geometry of the build-up to the component (10), and
- executing a manufacturing process for the build-up by way of manufacturing instructions (CAM) generated from the provided geometry of the build-up (12) and the geometry of the substrate surface (11).

11. Method according to claim 10, wherein the pre-existing component (10) has been machined in order to provide an even substrate surface (11), and wherein the build-up (12) is manufactured by way of a powder-bed-fusion method, such as selective laser melting or electron beam melting.

12. Method according to claim 10 or 11, wherein the build-up (12) is manufactured out of a high-performance material, such as a superalloy for turbine applications and with a complex geometry, i.e. at least comprising a geometry with small feature sizes and/or a cavity, such as a cooling channel (14).
